# EUROPÄISCHE PATENTSCHRIFT

(11) **EP 2 406 055 B1**
(45) Veröffentlichungstag und Bekanntmachung des Hinweises auf die Patenterteilung: **03.10.2018**
(21) Anmeldenummer: 10711986.9
(22) Anmeldetag: 10.03.2010
(51) Int. Cl.: B29C 45/76, B07C 5/342, G01N 21/88

(54) **VERFAHREN ZUM AUTOMATISIERTEN NACHWEIS EINES DEFEKTES AN EINER OBERFLÄCHE EINES FORMTEILS**
METHOD FOR AUTOMATICALLY DETECTING A DEFECT ON A SURFACE OF A MOLDED PART
PROCÉDÉ DE DÉTECTION AUTOMATISÉE D'UN DÉFAUT À LA SURFACE D'UNE PIÈCE MOULÉE

(30) Priorität: 10.03.2009 AT 3842009
(43) Veröffentlichungstag der Anmeldung: 18.01.2012
(73) Patentinhaber: Polymer Competence Center Leoben GmbH, 8700 Leoben (AT)
(72) Erfinder: GRUBER, Dieter P., A-8130 Eisbach (AT)
(74) Vertreter: Wirnsberger, Gernot
(86) Internationale Anmeldenummer: PCT/AT2010/000071
(87) Internationale Veröffentlichungsnummer: WO 2010/102319

(56) Entgegenhaltungen:
- WO-A1-00/67004
- WO-A1-2008/085160
- JP-A- 3 266 621
- JP-A- 4 198 744
- JP-A- 2001 141 669
- JP-A- 2003 276 069
- JP-A- 2004 025 515
- JP-A- 2005 043 222
- US-A- 3 909 138
- US-A- 4 433 385
- US-A- 5 367 378
- US-A1- 2005 023 468
- FUHRMANN G ET AL: "BILDVERARBEITUNGSSYSTEME - EINSATZ IN DER KUNSTSTOFFINDUSTRIE" KUNSTSTOFFBERATER, 201975 1, Bd. 41, Nr. 7/08, 1. Juli 1996 (1996-07-01), Seiten 8-10, XP000598255 ISSN: 0172-6374
- FUHRMANN G ET AL: "QUALITAETSSICHERUNG IM SPRITZGIESSPROZESS" KUNSTSTOFFE, CARL HANSER VERLAG, MUNCHEN, DE, Bd. 86, Nr. 12, 1. Dezember 1996 (1996-12-01), XP000679671 ISSN: 0023-5563

## Beschreibung

Die Erfindung betrifft ein Verfahren zum Nachweis eines Defektes an einer Oberfläche eines Formteils, insbesondere eines Spritzgussteils aus Kunststoff, wobei die Oberfläche des Formteils optisch vermessen und ein Messergebnis automatisiert ausgewertet wird, um gegebenenfalls einen Defekt nachzuweisen.

Bei einer Herstellung von Formteilen, z. B. Spritzgussteilen aus Kunststoff, können an einer Oberfläche eines Formteils Defekte verschiedener Art auftreten. Mögliche Defekte an der Oberfläche eines im Spritzguss gefertigten Formteils aus Kunststoff umfassen beispielsweise Einfallstellen, Feuchtigkeitsschlieren, Bindenähte, oberflächennahe Lunker und/oder Variationen im Glanz.

Wenngleich nach der Herstellung von Formteilen wie Spritzgussteilen aus Kunststoff im fertigen Formteil oftmals mit Messmethoden objektiv bzw. physikalisch nachweisbare Defekte der vorstehend genannten Art vorliegen, so können die erstellten Formteile dennoch brauchbar sein und verkaufbare Produkte darstellen. Entscheidend ist letztlich nicht, ob ein mittels einer eingesetzten Messmethode objektiv bzw. physikalisch nachweisbarer Defekt vorliegt, sondern ob dieser Defekt von einem Benutzer des Formteils beim Gebrauch visuell wahrgenommen wird. Anders ausgedrückt: Formteile mit einem oder mehreren Defekten sind nur dann unbrauchbar, wenn von einem Menschen zumindest ein Defekt am Formteil visuell auch erkannt wird.

Eine Wahrnehmung einer Oberfläche eines Formteils durch ein menschliches Auge hängt davon ab, wie einfallendes Licht von der Oberfläche gerichtet und/oder diffus reflektiert wird, wobei Phänomene wie Streuung, Mehrschicht-Reflexion und Beugung durch Mikrostrukturen überlagert sein können. Ein resultierender Lichtfluss, der auf ein menschliches Auge trifft, und die Verarbeitung der einhergehenden Sinnesreize bestimmt die visuelle menschliche Wahrnehmung der Oberfläche.

Nach der Herstellung werden Formteile einer Qualitätskontrolle unterworfen, um festzustellen, ob die Formteile bestimmten Qualitätsanforderungen genügen, insbesondere in Bezug auf möglicherweise gegebene Defekte. Diese Qualitätskontrolle wird üblicherweise durch erfahrenes Fachpersonal vorgenommen, welches anhand visueller Inspektion für jedes Formteil ermittelt, ob ein oder mehrere visuell wahrnehmbare Defekte vorliegen.

Eine Qualitätskontrolle durch Fachpersonal ist zeit- und kostenaufwändig. Es wurde daher bereits versucht, eine Qualitätskontrolle von z. B. spritzgegossenen Formteilen mithilfe von Methoden wie Konfokalmikroskopie automatisiert bzw. unabhängig von einer subjektiven menschlichen Beurteilung durchzuführen. Mit diesen Methoden werden objektive, reproduzierbare Messergebnisse erhalten. Nachteilig bei diesen Methoden ist jedoch, dass diese ein menschliches Wahrnehmungsempfinden nicht berücksichtigen. Dies bedeutet, dass ein Formteil mit einem Defekt eventuell als Ausschussware qualifiziert wird, auch wenn der physikalisch nachweisbare Defekt von einem Menschen visuell nicht wahrgenommen wird.

Aufgrund der Probleme einer automatisierten Qualitätskontrolle von spritzgegossenen Formteilen wird eine Qualitätskontrolle nach wie vor von erfahrenem Fachpersonal durchgeführt, was allerdings wie erwähnt ebenfalls mit Nachteilen verbunden ist. Neben den bereits angeführten Nachteilen eines hohen Zeit- und Kostenaufwandes kommt bei einer menschlichen Kontrolle auch hinzu, dass selbst erfahrenes Fachpersonal ein Formteil an verschiedenen Tagen unterschiedlich bewerten kann und ein Ergebnis einer derartigen subjektiven Qualitätskontrolle daher in hohem Maß unsicher ist
FUHRMANN G ET AL: "BILDVERARBEITUNGSSYSTEME - EINSATZ IN DER KUNSTSTOFFINDUSTRIE",KUNSTSTOFFBERATER, 201975 1, Bd. 41, Nr. 7/08, 1. Juli 1996, Seiten 8-10 offenbart ein Verfahren zum Nachweis eines Defektes an einer Oberfläche eines Formteils, insbesondere eines Spritzgussteils aus Kunststoff, wobei die Oberfläche des Formteils optisch vermessen und ein Messergebnis automatisiert ausgewertet wird, um gegebenenfalls einen Defekt nachzuweisen, wobei vom Formteil mittels einer Kamera zumindest ein zweidimensionales Bild in Form einer Intensitätsmatrix von n mal m Pixeln aufgenommen wird.

Aufgabe der Erfindung ist es, ein Verfahren der eingangs genannten Art anzugeben, das eine automatisierte Qualitätskontrolle von Formteilen ermöglicht, wobei visuell wirksame Defekte erkannt werden.

Diese Aufgabe wird gelöst, wenn bei einem Verfahren der eingangs genannten Art vom Formteil mittels einer Kamera zumindest ein zweidimensionales Bild in Form einer Intensitätsmatrix von n mal m Pixeln aufgenommen wird, wonach die Intensitätsmatrix optional in eine weitere Matrix umgerechnet wird, wonach die Intensitätsmatrix oder gegebenenfalls die weitere Matrix mit zumindest einer Funktion gefaltet wird, welche eine Kontrastwahrnehmungscharakteristik und ein Auflösungsvermögen eines menschlichen Auges beschreibt, wobei Wahrnehmungstensoren berechnet werden, wonach aus einer so erhaltenen Matrix in Bezug auf zumindest einen vorgegebenen Schwellwert berechnet wird, ob ein gegebenenfalls vorliegender Defekt von einem menschlichen Auge erkannt wird.

Bei einem erfindungsgemäßen Verfahren ist von Vorteil, dass mit diesem automatisiert geprüft werden kann, ob an einem Formteil ein von einem menschlichen Auge erkennbarer Defekt vorliegt. Erfahrenes Fachpersonal wird daher nicht mehr zur Bewertung einer Qualität eines Formteils benötigt.

In einem ersten Schritt eines erfindungsgemäßen Verfahrens wird mit einer Kamera, insbesondere einer Charge-coupled-device-(CCD-)Kamera, kontaktlos ein flächiges Bild in Form einer Intensitätsmatrix von n mal m Pixeln erhalten. Die für einzelne Pixel bzw. Bildpunkte erhaltenen Intensitätswerte spiegeln ortsaufgelöst eine Intensität des von einer untersuchten Oberfläche in Richtung der Kamera zurückgeworfenen Lichtes wider. Diese Intensitätsmatrix besteht aus einzelnen, diskreten und im mathematischen Sinn nicht zusammenhängenden Messwerten. Die Intensitätsmatrix kann gegebenenfalls sogleich für eine weitere Verarbeitung eingesetzt werden oder in eine weitere Matrix umgerechnet werden, die auf einem Computer einen geringeren Speicherbedarf aufweist, wobei gegebenenfalls auch redundante Daten eliminiert werden können. Bis hierher verläuft eine Datenverarbeitung unabhängig von einer menschlichen Wahrnehmung. Diese wird in einem weiteren Schritt berücksichtigt, wobei die Intensitätsmatrix oder gegebenenfalls die weitere Matrix mit zumindest einer Funktion gefaltet wird, welche eine Kontrastwahrnehmungscharakteristik und/oder ein Auflösungsvermögen eines menschlichen Auges beschreibt. Diesbezüglich anwendbare Funktionen sind an sich bekannt. Hierbei kann es sich z. B. um das Weber-Fechner-Gesetz oder das Potenzgesetz von Stevens handeln. Eine so erhaltene Matrix steht quasi für ein Bild einer Oberfläche des Formteils, wie es von einem menschlichen Auge empfunden wird. Schließlich kann anhand von einem oder mehreren vorgegebenen Schwellwerten automatisiert berechnet werden, ob ein eventuell ein Defekt vorliegt, der von einem menschlichen Auge erkannt wird, und das Formteil je nach Ergebnis als Ausschussware oder Gutteil qualifiziert werden.

Ein Abstellen auf von Menschen visuell erkennbare Defekte bringt auch den Vorteil mit sich, dass einzelne Formteile, die objektiv bzw. physikalisch nachweisbare, jedoch visuell nicht erkennbare bzw. unter einer Wahrnehmungsschwelle liegende Defekte aufweisen, nicht als Ausschussware bewertet werden.

Wie erwähnt kann die Intensitätsmatrix gegebenenfalls in eine weitere Matrix umgerechnet werden, insbesondere um die Intensitätswerte in eine für die vorgesehene Faltung geeignete Darstellung zu bringen und/oder einen Speicherbedarf bei der Datenverarbeitung mittels Computer gering zu halten. Wenn ein erfindungsgemäßes Verfahren in der laufenden Produktion zur Qualitätskontrolle eingesetzt wird, erweist es sich als zweckmäßig, diesen Schritt zwingend vorzusehen. Die weitere Matrix benötigt dann ein geringeres Speichervolumen auf einem Computer als die Intensitätsmatrix. Des Weiteren wird insbesondere auch eine Rechenzeit für nachfolgende Schritte verringert.

In vielen Fällen ist es ausreichend, ein Bild einer Oberfläche eines Formteils aufzunehmen. Im Hinblick auf einige Qualitätskriterien, z. B. einen Glanz eines Formteils aus Kunststoff, kann es aber auch vorgesehen sein, dass mehrere Bilder aus unterschiedlichen Blickwinkeln aufgenommen werden und jedes Bild gesondert ausgewertet wird. In diesem Fall wird ein untersuchtes Formteil nur dann nicht als Ausschussware bewertet, wenn für jedes der Bilder die Qualitätskontrolle positiv ist.

Von Vorteil ist es, dass das Formteil bei der Aufnahme des Bildes diffus beleuchtet wird, damit die Aufnahmebedingungen etwa den Bedingungen beim späteren Einsatz des Formteils entsprechen. Dabei wird zur Beleuchtung bevorzugt eine Lichtquelle eingesetzt, deren spektrale Emissionsintensität im sichtbaren Bereich des elektromagnetischen Spektrums im Wesentlichen einer Spektralkurve von Tageslicht entspricht. Sofern im Einzelfall im Einsatz bzw. bei Gebrauch des Formteils andere Bedingungen vorliegen, kann eine Beleuchtung bei der Aufnahme des Bildes selbstverständlich entsprechend angepasst werden.

Wie erwähnt kann als Kamera eine CCD-Kamera eingesetzt werden. Zweckmäßigerweise wird mit der CCD-Kamera ein Bild mit 300 mal 300 bis 3000 mal 3000 Intensitätswerten in Bezug auf eine Oberfläche von 0,5 cm mal 0,5 cm bis 20 cm mal 20 cm aufgenommen. Eine solche Auflösung ist ausreichend, um visuell erkennbare Defekte feststellen zu können, ohne unverhältnismäßig lange Rechenzeiten in Kauf nehmen zu müssen. Weitere Merkmale, Vorteile und Wirkungen der Erfindung ergeben sich aus einem nachfolgend dargestellten Ausführungsbeispiel. In den Zeichnungen, auf die dabei Bezug genommen wird, zeigen:
Fig. 1 einen Ausschnitt eines spritzgegossenen Formteils aus Kunststoff mit einer Bindenaht;
Fig. 2 eine Darstellung einer berechneten visuell wahrnehmbaren Intensität einer Oberfläche des Formteils gemäß Fig. 1 im Bereich der Bindenaht.

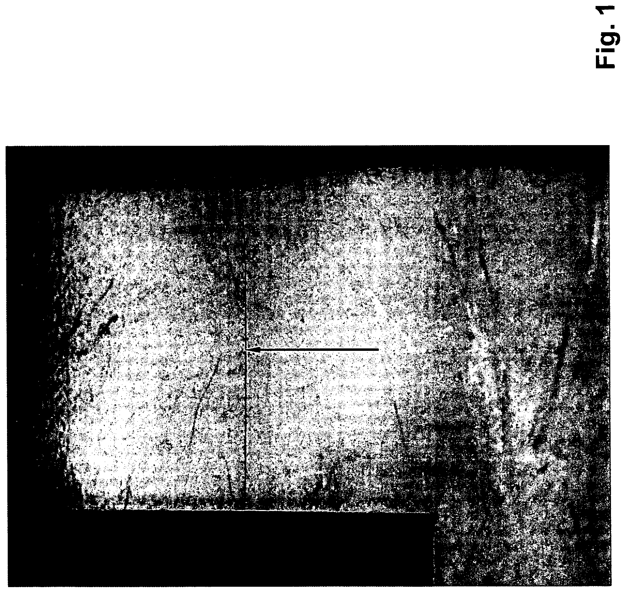

In Fig. 1 ist ein fotografischer Ausschnitt eines spritzgegossenen Formteils aus einem Kunststoff, hergestellt gemäß dem Stand der Technik, gezeigt. Das Formteil weist eine teilweise ersichtliche Ausnehmung auf. Des Weiteren ist in Fig. 1 eine Bindenaht ersichtlich, auf die durch einen Pfeil hingewiesen ist.

Von der Oberfläche des Formteils in Fig. 1 wurde mit einer CCD-Kamera mit 2452 mal 2054 Pixeln ein Bild aufgenommen. Bei der Aufnahme des Bildes wurde die Oberfläche des Formteils mit einem Leuchtmittel diffus beleuchtet. Das Leuchtmittel bestand aus einem Feld von Weißlicht emittierenden Leuchtdioden sowie einem in Richtung zur Probe hin zwischengeschalteten Diffusor. Eine Beleuchtungsstärke betrug 12500 Ix.

Aus dem von der CCD-Kamera aufgenommenen Bild bzw. den n mal m Intensitätswerten wurde anschließend eine Coocurrence-Matrix berechnet und aus dieser eine relative Kontrastausprägung. Die relative Kontrastausprägung stellt einen Zusammenhang zwischen benachbarten Intensitätswerten her, indem für jedes Matrixelement ein relativer Gradient zum Nachbarwert berechnet wird. Mit diesem mathematischen Prozess wurde bezweckt, eine für die nachfolgende Auswertung einer visuellen Wirksamkeit der Oberfläche geeignetere bzw. mit geringerem Rechenaufwand verbundene Matrixdarstellung der Messaufnahme zu erhalten. Bis zu diesem Schritt verlief die Datenverarbeitung wahrnehmungsunabhängig.

Der Schritt der Umrechnung der Intensitätsmatrix kann im Einzelfall auch entfallen, wenn die Intensitätsmatrix bereits in einer einfach zu verarbeitenden Form vorliegt oder Anforderungen an eine Messgenauigkeit gering sind. Sofern eine Umrechnung der Intensitätsmatrix erforderlich ist, können anstelle einer Cooccurrence-Matrix-Analyse auch andere Methoden zum Einsatz kommen, z. B. Filterung mittels Wavelets, andere statistische Methoden wie Analyse lokaler Binärmuster oder auch modellbasierte Methoden bzw. Lauflängenanalysen.

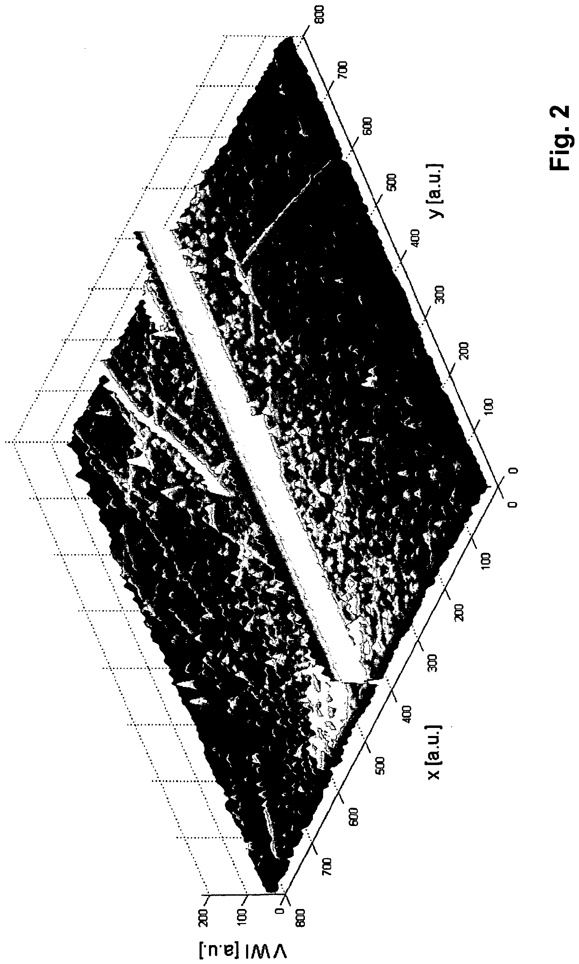

In einem nächsten Schritt wurden mithilfe von Funktionen, die aus der Wahrnehmungsphysik bekannt sind, z. B. das Weber-Fechner-Gesetz, sogenannte Wahrnehmungstensoren berechnet. Ein derart berechneter Wahrnehmungstensor ist in Fig. 2 grafisch dargestellt, wobei auf der z-Achse die visuell wirksame Intensität (VWI) aufgetragen ist. In Fig. 2 ist ersichtlich, dass die VWI im Bereich der Bindenaht deutlich höher ist als in den umgebenden Bereichen. In einer korrespondierenden Farbdarstellung des Wahrnehmungstensors kann ohne Weiteres erkannt werden, dass die VWI im Bereich der Bindenaht teilweise in einem roten Bereich bzw. über einem vorgegebenen Schwellwert liegt bzw. dass es sich um Ausschussware handelt. Der vorzugebende Schwellwert wird für einzelne Typen von Defekten bevorzugt empirisch durch Feldtests ermittelt. Ist der Schwellwert einmal festgelegt, kann eine Qualitätskontrolle vollständig automatisiert erfolgen.

Als Formteil ist im Rahmen der Erfindung jeder Gegenstand aus einem beliebigen Material zu verstehen, der durch einen Formgebungsprozess eine bestimmte geometrische Form erhalten hat.

## Patentansprüche

1. Verfahren zum Nachweis eines Defektes an einer Oberfläche eines Formteils, insbesondere eines Spritzgussteils aus Kunststoff, wobei die Oberfläche des Formteils optisch vermessen und ein Messergebnis automatisiert ausgewertet wird, um gegebenenfalls einen Defekt nachzuweisen, **dadurch gekennzeichnet, dass** vom Formteil mittels einer Kamera zumindest ein zweidimensionales Bild in Form einer Intensitätsmatrix von n mal m Pixeln aufgenommen wird, wonach die Intensitätsmatrix optional in eine weitere Matrix umgerechnet wird, wonach die Intensitätsmatrix oder gegebenenfalls die weitere Matrix mit zumindest einer Funktion gefaltet wird, welche eine Kontrastwahrnehmungscharakteristik und ein Auflösungsvermögen eines menschlichen Auges beschreibt, wobei Wahrnehmungstensoren berechnet werden, wonach aus einer so erhaltenen Matrix in Bezug auf zumindest einen vorgegebenen Schwellwert berechnet wird, ob ein gegebenenfalls vorliegender Defekt von einem menschlichen Auge erkannt wird.

2. Verfahren nach Anspruch 1, **dadurch gekennzeichnet, dass** die Intensitätsmatrix in eine weitere Matrix umgerechnet wird, welche ein geringeres Speichervolumen auf einem Computer benötigt als die Intensitätsmatrix.

3. Verfahren nach Anspruch 1 oder 2, **dadurch gekennzeichnet, dass** mehrere Bilder aus unterschiedlichen Blickwinkeln aufgenommen werden und jedes Bild gesondert ausgewertet wird.

4. Verfahren nach einem der Ansprüche 1 bis 3, **dadurch gekennzeichnet, dass** das Formteil bei der Aufnahme des Bildes diffus beleuchtet wird.

5. Verfahren nach Anspruch 4, **dadurch gekennzeichnet, dass** zur Beleuchtung eine Lichtquelle eingesetzt wird, deren spektrale Emissionsintensität im sichtbaren Bereich des elektromagnetischen Spektrums im Wesentlichen einer Spektralkurve von Tageslicht entspricht.

6. Verfahren nach einem der Ansprüche 1 bis 5, **dadurch gekennzeichnet, dass** als Kamera eine CCD-Kamera eingesetzt wird.

7. Verfahren nach Anspruch 6, **dadurch gekennzeichnet, dass** mit der CCD-Kamera ein Bild mit 300 mal 300 bis 3000 mal 3000 Intensitätswerten in Bezug auf eine Oberfläche von 0,5 cm mal 0,5 cm bis 20 cm mal 20 cm aufgenommen wird.

## Claims

1. Method for detecting a defect on a surface of a moulded part, in particular an injection-moulded part made of plastic, wherein the surface of the moulded part is optically measured and a measurement result is evaluated in an automated manner in order to detect a defect, where applicable, **characterized in that** using a camera, at least one two-dimensional image is recorded of the moulded part in the form of an intensity matrix having n times m pixels, whereupon the intensity matrix is optionally converted into a further matrix, whereupon the intensity matrix or, if appropriate, the further matrix is convolved with at least one function describing a contrast perception characteristic and a resolving power of a human eye, wherein perception tensors are calculated, whereupon with respect to a predetermined threshold value the matrix obtained in this manner is used to calculate whether any existing defect is recognized by a human eye.

2. Method according to claim 1, **characterized in that** the intensity matrix is converted into a further matrix which requires a smaller storage capacity on a computer than the intensity matrix.

3. Method according to claim 1 or 2, **characterized in that** a plurality of images is recorded from different viewing angles and each image is evaluated separately.

4. Method according to any one of claims 1 to 3, **characterized in that** the moulded part is illuminated with diffuse light during the recording of the image.

5. Method according to claim 4, **characterized in that** a light source is used to provide the illumination, the spectral emission intensity of which in the visible region of the electromagnetic spectrum substantially corresponds to a spectral curve of daylight.

6. Method according to any one of claims 1 to 5, **characterized in that** a CCD camera is used as the camera.

7. Method according to claim 6, **characterized in that** with the CCD camera an image is recorded with 300 times 300 times 300 to 3000 times 3000 intensity values in relation to a surface of 0.5 cm times 0.5 cm to 20 cm times 20 cm.

## Revendications

1. Procédé, destiné à détecter un défaut sur une surface d'une pièce moulée, notamment d'une pièce moulée par injection en matière plastique, la surface de la pièce moulée étant mesurée optiquement et un résultat de mesure étant évalué de manière automatisée pour détecter le cas échéant un défaut, **caractérisé en ce qu'**au moyen d'un caméra, au moins une image bidimensionnelle de la pièce moulée est prise sous la forme d'une matrice d'intensité de n fois m pixels, suite à quoi, la matrice d'intensité est convertie en option en une autre matrice, suite à quoi, la matrice d'intensité ou le cas échéant l'autre matrice est pliée à l'aide d'au moins une fonction qui décrit une caractéristique de perception de contraste et un pouvoir de résolution d'un oeil humain, des tenseurs de perception est calculés, suite à quoi, à partir d'une matrice obtenue de la sorte, en rapport à au moins une valeur seuil prédéfinie, il est calculé si un défaut existant le cas échéant est identifié par un oeil humain.

2. Procédé selon la revendication 1, **caractérisé en ce que** la matrice d'intensité est convertie en une autre matrice, laquelle nécessite sur un ordinateur un volume de mémoire moindre à celui de la matrice d'intensité.

3. Procédé selon la revendication 1 ou 2, **caractérisé en ce que** plusieurs images sont prises à partir de différents angles de vision et chaque image est évaluée à part.

4. Procédé selon l'une quelconque des revendications 1 à 3, **caractérisé en ce que** lors de la prise de l'image, la pièce moulée est exposée à un éclairage diffus.

5. Procédé selon la revendication 4, **caractérisé en ce que** pour l'éclairage, il est utilisé une source lumineuse dont l'intensité d'émission spectrale dans le domaine visible du spectre électromagnétique correspond sensiblement à une courbe spectrale de lumière diurne.

6. Procédé selon l'une quelconque des revendications 1 à 5, **caractérisé en ce qu'**une caméra CCD est utilisée en tant que caméra.

7. Procédé selon la revendication 6, **caractérisé en ce qu'**avec la caméra CCD est prise une image avec de 300 fois 300 à de 3000 fois 3000 valeurs d'intensité en rapport à une surface de 0,5 cm fois 0,5 cm à 20 cm fois 20 cm.
